# EUROPÄISCHE PATENTSCHRIFT

(11) **EP 0 787 671 B1**
(45) Veröffentlichungstag und Bekanntmachung des Hinweises auf die Patenterteilung: **07.03.2001**
(21) Anmeldenummer: 96114714.7
(22) Anmeldetag: 13.09.1996
(51) Int. Cl.: B65G 53/52, B65D 88/70, B65G 53/42, B65G 53/58

(54) **Düsenpatrone**
Nozzle cartridge
Cartouche de buse

(30) Priorität: 13.09.1995 DE 19533837
(43) Veröffentlichungstag der Anmeldung: 06.08.1997
(73) Patentinhaber: Thyssen Krupp Stahl AG, 40211 Düsseldorf (DE)
(72) Erfinder: Feldhaus, Bernd, 47178 Duisburg (DE)
(74) Vertreter: Cohausz & Florack

(56) Entgegenhaltungen:
- EP-A- 0 485 726
- DE-A- 3 719 530
- DE-A- 4 128 165
- FR-A- 2 464 208
- FR-A- 2 637 880
- US-A- 4 021 078

## Beschreibung

Die Erfindung betrifft eine Düsenpatrone, die in der Aufnahmeöffnung einer Fördervorrichtung für fließfähige, insbesondere rieselfähige oder pulverförmige Stoffe montiert ist, mit einem Gehäuse, welches einen Zuströmkanal aufweist, in welchem ein gasdurchlässiger Sintermetallkörper sitzt, durch den ein gasförmiges Fluid in die Fördervorrichtung einströmt. Eine solche Düsenpatrone ist beispielsweis aus der DE 41 28 165 A1 bekannt. Darüber hinaus betrifft die Erfindung vorteilhafte Verwendungen einer derartigen Düsenpatrone.

Eine andere Düsenpatrone ist aus der EP 0 485 726 bekannt. Diese bekannte Düse ist zum Injizieren von Gas in die Kavität eines Kunststoffformwerkzeuges, insbesondere einer Spritzgußform, bestimmt. Bei der bekannten Düse sitzt der Sintermetallkörper nach Art eines Stopfens in dem der Gasversorgungsleitung zugeordneten Endabschnitt des Zuströmkanals. In dieser Stellung ist er durch eine in das Gehäuse der Düsenpatrone von der dem Werkzeug zugeordneten Stirnseite her eingeschraubten Hülse gehalten.

Der Sintermetallkörper der bekannten Düsenpatrone ermöglicht bei bestimmungsgemäßem Gebrauch das Einblasen von Gas während der Herstellung von Kunststoffformteilen. Gleichzeitig verhindert er bei einem Druckabfall in der Gasversorgungsleitung das Eindringen von fließfähigem Kunststoff. Der Versuch, den bekannten Düsenpatronen entsprechende Düsenpatronen an einer Fördervorrichtung der für pulverförmige, rieselfähige Stoffe zu verwenden, hat jedoch gezeigt, daß derartige Düsen sehr schnell verschleißen und nur bis zu einem relativ geringen Verschleiß störungsfrei funktionieren. Sobald sich ein Verschleiß einstellt, besteht die Gefahr, daß der Sintermetallkörper verstopft oder von dem auf seiner Stirnfläche anstehenden Material durchbrochen wird.

Bei der pneumatischen Druckförderung von rieselfähigen, insbesondere pulverförmigen Materialien, wie sie beispielsweise in Anlagen zur Roheisenentschwefelung eingesetzt werden, besteht ein weiteres Problem darin, daß diese Materialien zum Zusammenbacken und zum Haften an den Wandungen des Druckförderers neigen. Das Haftenbleiben des Materials führt dazu, daß das anhaftende Material schließlich nicht mehr fließfähig ist.

Eine Vorrichtung zum Fördern von Pulver aus einem Behälter ist aus der französischen Offenlegungsschrift FR-A-2 637 880 bekannt. Diese Vorrichtung weist zum einen ein äußeres Rohrstück auf, das mit einer Rohrleitung verbunden ist, in der das Produkt gefördert wird. In diesem äußeren Rohrstück ist zum anderen ein inneres Rohrstück eingesetzt, das mit dem Behälter verbunden ist, in dem das zu transportierende Gut gelagert wird.

An der Stelle der Überlappung der beiden Rohrstücke weist das äußere Rohrstück an seiner Innenseite eine umlaufende Nut auf, die, über eine an sie angeschlossene Leitung, mit einer Pumpe für ein Transportfluid verbunden ist. Ausgehend von dieser umlaufenden Nut besteht zwischen den Rohrstücken ein umlaufender Spalt, der am Ende des inneren Rohrstücks zwischen dem inneren und dem äußeren Rohrstück eine Düse bildet. Durch diese Düse wird das Transportfluid in das Innere des Rohrleitungssystems geführt, wodurch das zu transportierende Gut weiter gefördert wird. Nachteilig bei dieser Vorrichtung ist, daß die Düse offen ist und somit bei Stillstandszeiten mit dem in dem Rohrleitungssystem befindlichen Material verstopfen kann.

Um ein gleichmäßiges Abfließen des rieselfähigen, insbesondere pulverförmigen Materials sicherzustellen, ist beispielsweise in der deutschen Offenlegungsschrift 1 909 219 vorgeschlagen worden, ein Fluidisierungsgas, beispielsweise Argon, im Bereich eines zwischen dem Druckförderer und der Transportleitung für das rieselfähige Material angeordneten Auslaufkonus über eine Vielzahl von Düsen in das Material einzudüsen. Auf diese Weise wird das Material aufgelockert, so daß es störungsfrei aus dem Auslaufkonus abfließen kann.

Der bekannte Auslaufkonus weist doppelt ausgebildete Wandungen auf. Seine Innenwandung ist mit einer Vielzahl von Düsenbohrungen versehen, während seine außenliegende Wandung eine Anschlußöffnung für eine Gasversorungsleitung aufweist. Fluidisierungsgas, das in den Zwischenraum zwischen der äußeren und inneren Wandung des Konus einströmt, verteilt sich dort, so daß ein annähernd gleicher Volumenstrom aus jeder der Düsenöffnungen in das sich in dem Auslaufkonus befindende Material eingedüst wird.

Bei der praktischen Erprobung bekannter Auslaufkonen der voranstehend erläuterten Art ist festgestellt worden, daß nach einer gewissen Betriebsdauer trotz einer stetigen Bedüsung mit einem Fluidisierungsgas Probleme beim Austrag des Materials aus dem Druckfördergefäß entstehen. Als Ursache für diese Probleme stellten sich verstopfte oder übermäßig verschlissene Düsen heraus, an denen das Auflockerungsgas nur punktuell in den Konus eintritt.

Die voranstehend genannten Verschleißerscheinungen machen es erforderlich, die bekannten Auslaufkonen in relativ kurzen Zeitabständen zu warten. Dabei bringt jede Wartung den Stillstand der mit dem entsprechenden Druckförderer verbundenen Anlage mit sich. Die durch den Stillstand der betreffenden Anlagen verursachten Kosten werden zusätzlich dadurch erhöht, daß auch während der Betriebspausen ständig Fluidisierungsgas durch eine große Anzahl von Düsen gefördert werden muß, um deren Verstopfen zu verhindern.

Neben dem voranstehend erläuterten Auslaufkonus ist ein weiterer Fülltrichter für staubförmiges oder körniges Schüttgut aus dem Deutschen Gebrauchsmuster G 87 06 949 bekannt. Bei diesem bekannten Fülltrichter wird Fluidisierungsgas über lösbar an ihm befestigte Düsenpatronen eingeblasen.

Eine andere Vorrichtung zum Fördern von Pulver aus einem Behälter ist aus der deutschen Offenlegungsschrift DE 40 21 674 A1 bekannt. Diese Vorrichtung weist einen Düsenkopf auf, der vertikal von oben in das Gefäß eingeführt wird. Bei einer derartigen Anordnung eines Düsenkopfes stellt sich das Problem des Verstopfens der einzelnen Düsen nicht aufgrund des vertikal von oben erfolgenden Einführens des Düsenkopfes.

In der DE 37 19 530 A1 wird schließlich im Zusammenhang mit einem pneumatischen Fördergerät darauf hingewiesen, daß in der Vergangenheit versucht worden ist, Sintermetallplatten im Zusammenhang mit dem Eindüsen eines Fluids zu verwenden. Gleichzeitig wird jedoch von einer solchen Verwendung abgeraten, da sich in der Praxis gezeigt habe, daß derartige Sinterplatten innerhalb kurzer Zeit undurchlässig und damit unbrauchbar werden.

Die Aufgabe der Erfindung besteht darin, eine Düsenpatrone der eingangs genannten zu schaffen, welche problemlos auch an Fördervorrichtung für pulverförmige, rieselfähige Materialien über eine lange Betriebsdauer eingesetzt werden kann und eine hohe Betriebssicherheit gewährleistet.

Diese Aufgabe wird erfindungsgemäß dadurch gelöst,
- daß der Sintermetallkörper mit seinem der Fördervorrichtung zugeordneten, stirnseitigen Endabschnitt zumindest teilweise in der Aufnahmeöffnung sitzt, und
- daß der Zuströmkanal in Strömungsrichtung des Fluids unmittelbar vor dem Sintermetallkörper nach Art einer Düsenbohrung verengt ist.

Vorteilhafterweise sollte der Sintermetallkörper hochporös ausgebildet sein.

Dadurch, daß die Düsenpatrone einen gasdurchlässigen Sintermetallkörper aufweist, den in der Aufnahmeöffnung der Fördervorrichtung sitzt, ist sichergestellt, daß bei einer Betriebspause bzw. einer Neubefüllung der Fördervorrichtung, während der ggf. kein Fluidisierungsgas in die Fördervorrichtung eingedüst wird, kein von der Fördervorrichtung gefördertes Material in die Düsenpatronen eindringt.

Der Sinterkörper wirkt dabei wie ein Rückschlagventil, welches einen Fluidstrom in Richtung des Innern des Auflaufkonus ermöglicht, gleichzeitig aber ein Eindringen des Materials in die Gasleitung verhindert. Die bei den bekannten Auslaufkonen vorhandene Gefahr der Verstopfung oder des unverhältnismäßig großen Verschleißes einzelner Düsen besteht daher nicht.

Zusätzlich ist dadurch, daß die erfindungsgemäße Düsenpatrone eine auf der der Gasversorgung zugeordneten Seite des Sintermetallkörpers angeordnete Düsenbohrung aufweist, sichergestellt, daß die Größe des durch den Sintermetallkörper in die Fördervorrichtung einströmenden Gasvolumenstroms gezielt gesteuert werden kann. So können beispielsweise an solchen Abschnitten der Fördervorrichtung, in denen zum Auflockern des durch die Fördervorrichtung geförderten Materials große Volumenströme benötigt werden, Düsenpatronen mit Bohrungen von größerem Durchmesser eingesetzt werden, während in anderen Bereichen Düsenpatronen mit Bohrungen von kleinerem Durchmesser eingesetzt werden.

Schließlich wird dadurch, daß erfindungsgemäß das Fluidisierungsgas zunächst über eine Düsenbohrung in den Sintermetallkörper und von dort aus in die Fördervorrichtung strömt, die Betriebssicherheit erhöht, da diese Anordnung auch dann noch einen ausreichenden Gasvolumenstrom gewährleistet, wenn der Sintermetallkörper verschlissen oder gebrochen ist.

Durch das Eindüsen des Fluidisierungsgases in die Fördervorrichtung über einen Sinterkörper werden sowohl während des normalen Betriebs als auch während der Betriebspausen und des Neubefüllens erhebliche Mengen an Fluidisierungsgas eingespart. Dies wird während des Betriebs durch das Eindüsen des Gases in einer Vielzahl von harten Einzelstrahlen erreicht, die aufgrund der von ihnen überstrichenen großen Fläche eine hohe Effektivität hinsichtlich der Fluidisierungswirkung haben. Während der Betriebspausen und des Neubefüllens dagegen kann eine Bedüsung der Fördervorrichtung mit Fluidisierungsgas vollständig unterbleiben, da der Sintermetallkörper ein Eindringen des Materials in den Düsenkörper verhindert. Bei praktischen Versuchen hat sich herausgestellt, daß auf diese Weise die Fluidisierungsgaskosten für eine mit erfindungsgemäß ausgestalteten Düsenpatronen ausgestattete Fördervorrichtung gegenüber einer entsprechenden herkömmlichen Fördervorrichtung um bis zu 95% gesenkt werden konnten.

Vorteilhafterweise sollte die Größe der Düsenbohrungen aller Düsenpatronen so ausgelegt sein, daß durch alle Düsen zusammen bei maximal möglichem Fluiddruck die höchstens erforderliche Fluidmenge austreten kann.

Eine bevorzugte Ausführungsform der erfindungsgemäßen Düsenpatrone ist dadurch gekennzeichnet, daß nur die der Fördervorrichtung zugeordnete und die in den Innenraum der Fördervorrichtung hineinragende Stirnfläche gasdurchlässig ist, während die restlichen, nicht in die Fördervorrichtung reichenden Abschnitte gasdicht gegenüber der Umgebung abgeschlossen sind.

Bei einer derartigen Ausgestaltung des Sintermetallkörpers ist sichergestellt, daß das unter hohem Druck in die Fördervorrichtung einströmende Fluidisierungsgas in einer Vielzahl von harten Einzelstrahlen annähernd halbbogenförmig in die Fördervorrichtung eingedüst wird, wobei sowohl die Richtung der Einzelstrahlen als auch die Fläche, über die die Einzelstrahlen austreten, definiert ist. Je nach Anwendungsfall kann dabei die betreffende Stirnfläche des Sintermetallkörpers eben, halbkugelförmig oder in einer anderen geeigneten Form ausgebildet sein.

Je nach der örtlichen Gegebenheit kann es günstig sein, wenn die der Fördervorrichtung zugeordnete Stirnfläche des Sintermetallkörpers eben, konisch oder konvex oder in anderer Weise sphärisch gekrümmt ausgebildet ist. Auf diese Weise kann die Verteilung und die Strömungsrichtung der in die Fördervorrichtung eintretenden Gasstrahlen optimal an die jeweiligen räumlichen Gegebenheiten angepaßt werden.

Durch die Verwendung von Düsenpatronen zum Eindüsen von Fluidisierungsgas an einem Auslaufkonus kann auf dessen doppelwandige Ausführung verzichtet werden. Gleichzeitig können die einzelnen Düsenpatronen auf einfache Weise gewartet werden, da sie von außen an dem Auslaufkonus befestigbar sind. Dies gilt insbesondere dann, wenn die Düsenpatronen lösbar an dem Auslaufkonus befestigt sind.

Ein weiterer Vorteil der Verwendung von erfindungsgemäß ausgestalteten Düsenpatronen an einem Auslaufkonus besteht darin, daß es mit einem derart ausgestatteten Auslaufkonus beispielsweise bei der Auflockerung von Roheisenentschwefelungsstoffen möglich ist, geringe Austragsregelspalten und somit geringe Austragsmengen zu fahren. Dies wird durch die geringen Gasmengen erreicht, welche zur Auflockerung der entsprechenden Stoffe in dem erfindungsgemäßen Auslaufkonus benötigt werden. Anders als bei den bekannten Auslaufkonen mit herkömmlicher Auflockerung, bei der erheblich größere Gasmengen benötigt werden, verdrängt das Auflockerungsgas im Bereich des Austrittspalts bei dem erfindungsgemäßen Auslaufkonus erst bei sehr geringen Spaltweiten.

Die Handhabung eines mit erfindungsgemäß ausgebildeten Düsenpatronen ausgestatteten Auslaufkonus kann zusätzlich dadurch vereinfacht werden, daß der Auslaufkonus in mindestens ein oberes und ein unteres Teil geteilt ist und daß beide Teile lösbar miteinander verbunden sind. Diese Ausgestaltung des Auslaufkonus ermöglicht es in dem Fall, daß die relativ kleine Austrittsöffnung des Konus verstopft ist, den unteren, hinsichtlich seines Gewichtes leichter handhabbaren Teil des Konus, in dem sich die Austrittsöffnung befindet, von dem schwereren oberen Teil zu lösen, ohne daß der Auslaufkonus als Ganzes von dem zugehörigen Druckförderer getrennt werden muß.

Ebenso vorteilhaft wie die Verwendung erfindungsgemäßer Düsenpatronen an einem Auslaufkonus eines Druckfördergefäßes ist deren Verwendung an einer Dichtstromförderleitung. Bei der Dichtstromförderung wird im Gegensatz zu der Dünnstromförderung die Förderleitung von einer unter Gasdruck stehenden Leitung begleitet, die an vielen Stellen mit der Förderleitung zur Fluidisierung des darin geförderten Materials verbunden ist.

Nachfolgend wird die Erfindung anhand einer Ausführungsbeispiele darstellenden Zeichnung näher erläutert. Es zeigen:
- Fig. 1: einen an einem Druckförderer für eine Roheisenentschwefelungsanlage eingesetzten Auslaufkonus im Längsschnitt;
- Fig. 2: den Auslaufkonus nach Fig. 1 in einer Ansicht von oben;
- Fig. 3: eine an dem Auslaufkonus nach den Fig. 1 und 2 eingesetzte Düsenpatrone im Längsschnitt;
- Fig. 4: eine Roheisenentschwefelungsanlage in schematischer Ansicht,
- Fig. 5: eine Dichtstromförderstrecke in schematischer Seitenansicht,
- Fig. 6: die Dichtstromförderstrecke nach Fig. 5 in einer ausschnittsweisen, vergrößerten Schnittansicht.

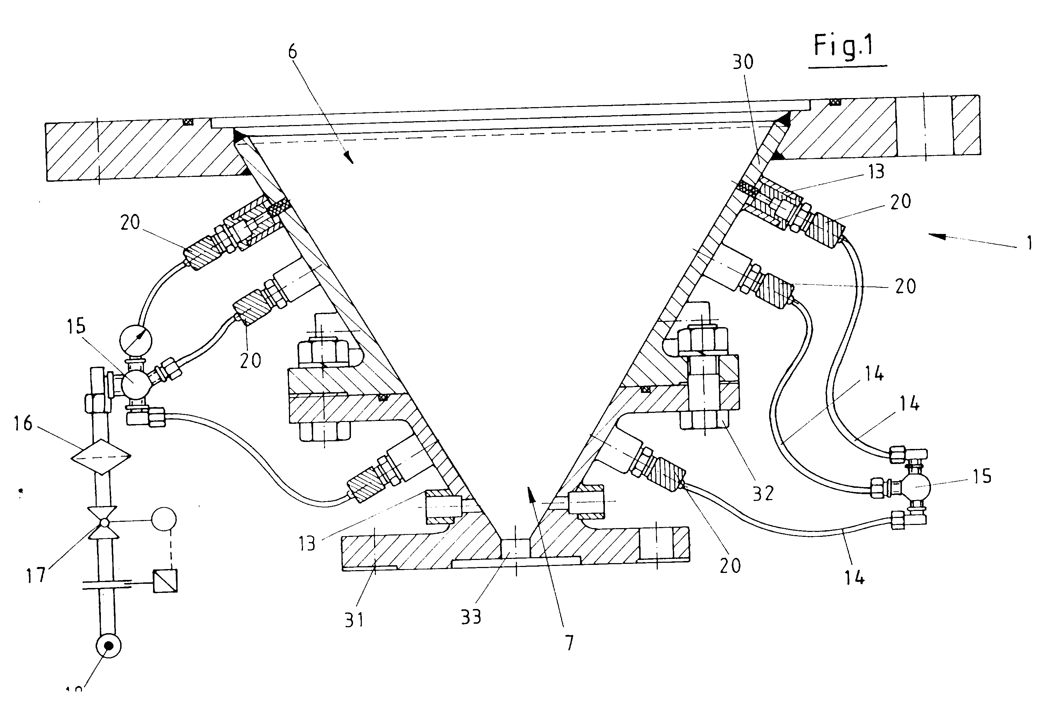

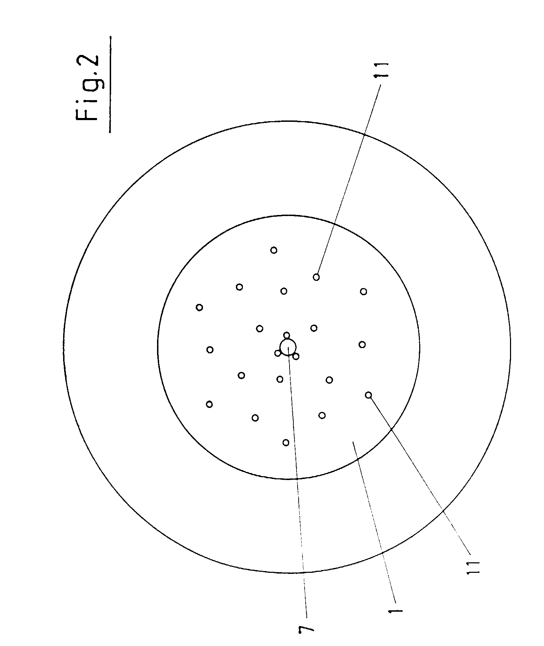

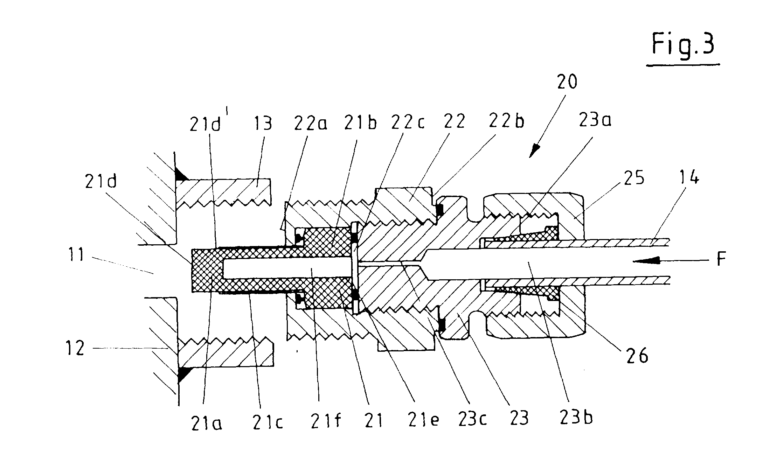

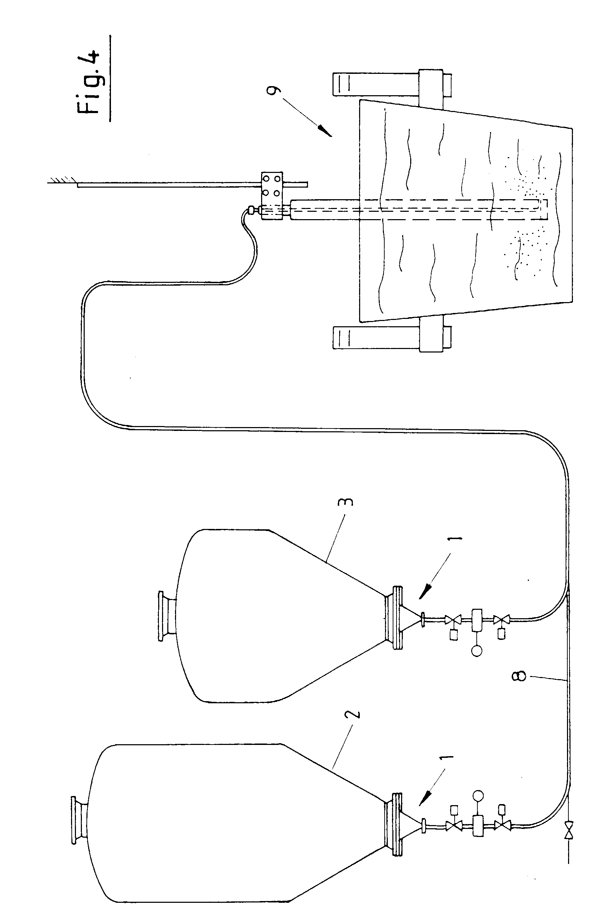

Der in den Figuren 1 bis 4 gezeigte Auslaufkonus 1 ist an der Auslaßöffnung jeweils eines Druckfördergefäß 2,3 angeschlossen und weist eine im wesentlichen konische Form auf, deren Durchmesser vom Einlaufbereich 6 zum Auslaufbereich 7 des Auslaufkonus 1 hin abnimmt. Aus dem Druckförderbehälter 2 wird über den an ihn angeschlossenen Auslaufkonus 1 beispielsweise pulverförmiges Karbit über eine Abströmleitung 8 in eine Roheisenschmelze 9 geleitet, wobei das pulverförmige Karbit mit ebenfalls feinkörnigem Magnesium vermischt wird, das aus dem zweiten Druckförderbehälter 3 über den daran angeschlossenen Auslaufkonus 1 in die Abströmleitung 8 gefördert wird.

Der Auslaufkonus 1 weist jeweils eine Vielzahl von Düsenöffnungen 11 auf, die in die einwandig ausgebildete konische Wandung 12 des Auslaufkonus 1 eingeformt sind. Konzentrisch zu jeder der Düsenöffnungen 11 angeordnet ist über ein Anschraubgewinde 13 jeweils eine Düsenpatrone 20 lösbar an der Außenseite der Wandung 12 befestigt. Die Düsenpatrone 20 ist über jeweils eine Verbindungsleitung 14 an eine Gasversorgungsleitung 15 angeschlossen, die als Ringleitung ausgebildet ist und alle Düsenpatronen 20 mit Fluidisierungsgas versorgt. Die Gasversorgungsleitung 15 ist über ein Feinstfilter 16 und ein Regelventil 17 mit einer Gasleitung 18 für das Fluidisierungsgas verbunden.

Die Düsenpatronen 20 bestehen jeweils aus einem hochporösem Sintermetallkörper 21, dessen vorderer stiftförmig ausgebildeter Abschnitt 21a einen gegenüber seinem hinteren Abschnitt 21b geringeren Durchmesser aufweist. Der vordere Abschnitt 21a des Sintermetallkörpers 21 ragt mit dem größeren Teil seiner Länge über die Stirnseite 22a eines Einschraubkörpers 22 frei hinaus. Die Seitenflächen 21c der nicht in den Auslaufkonus 1 ragenden Abschnitte des Sintermetallkörpers 21 sind durch mechanische Bearbeitung gasdicht ausgebildet, während seine vordere Stirnfläche 21d und die Seitenflächen seines im an dem Auslaufkonus 1 montierten Zustand frei in den Auslaufkonus 1 ragenden Abschnitts 21d' eine Vielzahl von feinsten, gasdurchlässigen Öffnungen aufweist.

Bei an dem Auslaufkonus 1 befestigten Düsenpatronen 20 ragt mindestens die Stirnseite 21d des Sintermetallkörpers 21 und der gasdurchlässige Abschnitt 21d' in den Auslaufkonus 1, so daß das Fluidisierungsgas in einer Vielzahl von harten Einzelstrahlen in das pulverförmige Material eingedüst wird. Von der hinteren Stirnfläche 21e des Sintermetallkörpers ist eine zentrale offenporige Einsenkung 21f in den Sintermetallkörper 21 eingeformt, die zum gleichmäßigen Einleiten des Fluidisierungsgases in den Sintermetallkörper 21 dient.

Der Einschraubkörper 22 weist eine in seine hintere Stirnfläche 22b eingeformte Einsenkung 22c auf, die in einer die vordere Stirnseite 22a des Einschraubkörpers 22 durchdringenden Durchgangsbohrung mündet. In den hinteren Abschnitt der Einsenkung 22b ist ein Innengewinde eingeformt, in das der vordere Abschnitt eines Düsenkörpers 23 eingeschraubt ist. Im vorderen Abschnitt der Einsenkung 22b des Einschraubkörpers 22 sitzt der verbreiterte Abschnitt 21b des Sintermetallkörpers 21, der über Ringdichtungen 24 gegenüber der Umgebung abgedichtet ist.

Der Düsenkörper 23 weist ebenfalls eine ausgehend von seiner hinteren Stirnseite 23a in ihn eingeformten Zuströmkanal 23b auf, der in Strömungsrichtung F des Fluidisierungsgases in einer Düsenbohrung 23c endet. Die Düsenbohrung 23c mündet auf der vorderen dem Sintermetallkörper 21 zugeordneten Stirnseite 23e des Düsenkörpers 23. In den Zuströmkanal 23b des Düsenkörpers 23 endet die jeweilige Versorgungsleitung 13, die mit einer Überwurfmutter 25 und einer Quetschdichtung 26 fest und dicht mit dem Düsenkörper 23 verbunden ist.

Der Auslaufkonus 1 ist in einen oberen Teil 30 und einen unteren Teil 31 geteilt, wobei beide Teile 30,31 mittels Schraubverbindungen 32 lösbar miteinander verbunden sind. Dabei ist der untere Teil 31 sowohl hinsichtlich seiner Abmessungen als auch hinsichtlich seines Gewichtes erheblich kleiner als der obere Teil 30 des Auslaufkonus.

Die Teilung des Auslaufkonus 1 in den oberen und unteren Teil 30,31 und die lösbare Verbindung der beiden Teile 30,31 ermöglicht es bei einer Verstopfung der Austrittsöffnung 33 des Auslaufkonus 1 den unteren Teil 31 von dem oberen Teil 30 zum Reinigen der Austrittsöffnung zu lösen.

Die Reglung des aus den Druckfördergefäßen 2,3 austretenden Volumenstroms an pulverförmigem oder feinkörnigem Material erfolgt durch eine nicht gezeigte, herkömmliche Regeleinrichtung.

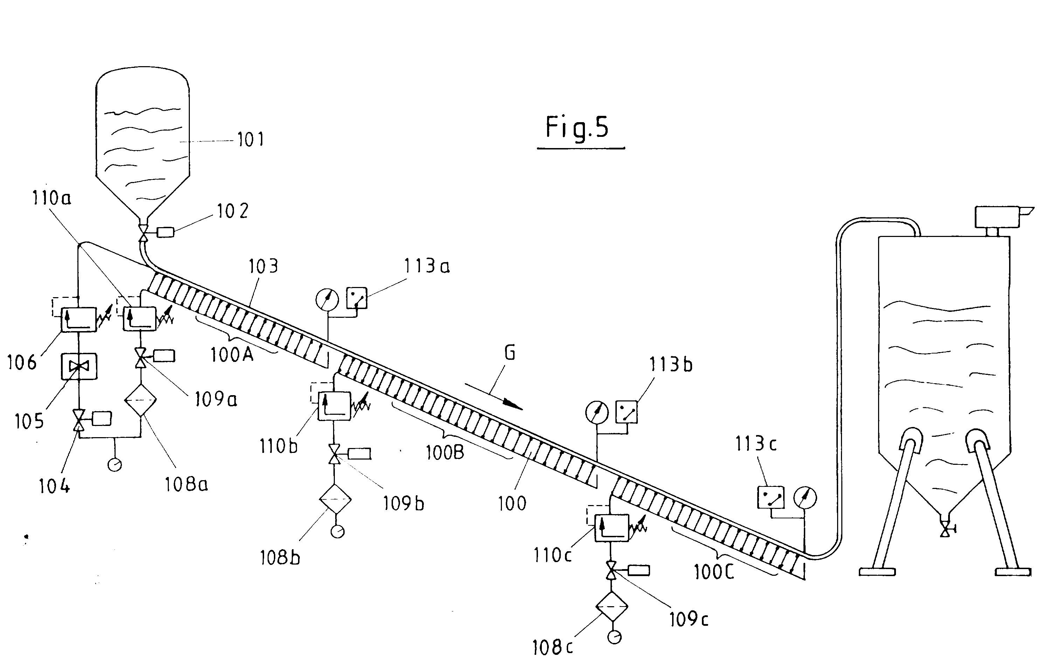

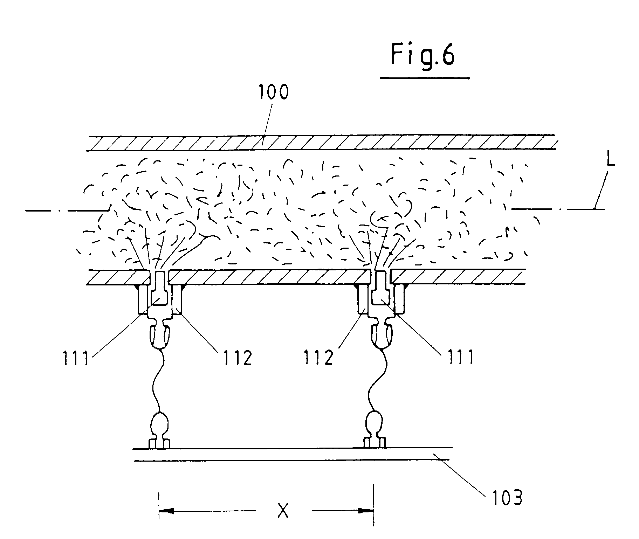

Die in den Figuren 5 und 6 gezeigte Förderstrecke 100 ist an ein Druckfördergefäß 101 angeschlossen. Aufgrund ihrer Länge ist sie in Abschnitte 100A, 100B und 100C unterteilt. Das aus dem Druckfördergefäß 101 ausgetragene Materialvolumen kann über ein Austragregelventil 102 eingestellt werden.

Parallel zu der Förderstrecke 100 ist eine Transportgasleitung 103 verlegt. Der durch die Transportgasleitung 103 strömende Gasvolumenstrom ist über ein Transportgasventil 104, einen Mengenregler 105 und einen Druckregler 106 regelbar. Jeder der Abschnitte 100A, 100B, 100C wird zusätzlich über eine Sekundärversorgung mit Transportgas versorgt, wobei die Sekundärversorgung jeweils über ein Feinstfilter 108a,108b,108c ein Ventil 109a,109b,109c und einen Druckregler 110a,110b,110c regelbar ist.

In regelmäßigen Abständen x sind erfindungsgemäß ausgebildete Düsenpatronen 111 in Ausnahmeöffnungen 112 der Förderstrecke 100 eingeschraubt. Dabei sind die Stirnflächen der Düsenpatronen 111 derart angeordnet, daß die Hauptstrahlrichtung des Fluidisierungsgases im wesentlichen rechtwinklig zur Längsachse L der Förderstrecke 100 ausgerichtet ist. Bei einer vertikalen Ausrichtung der Förderstrecke werden die Düsenpatronen sich gegenüberliegend und um 90° versetzt montiert.

Der Druckabfall in der Transportgasleitung 103 kann mittels jedem Abschnitt 100A,100B,100C zugeordneter Druckabfallregler 113a,113b,113c eingestellt und kontrolliert werden.

Die erfindungsgemäß ausgestattete Förderstrecke arbeitet wie folgt:

Beim Neuanfahren der noch leeren Förderstrecke ist der Druckförderer 101 mit Fördergut befüllt und steht unter einem Überdruck. Das Austragventil 102 und das Transportgasventil 104 sind geöffnet. Der Druckregler 106 läßt mit dem ihm vorgeschalteten Mengenregler 105 eine bestimmte Gasmenge bis zu einem bestimmten maximalen Gasdruck in die Transportgasleitung 103 einströmen. Innerhalb kurzer Zeit nach dem Öffnen des Ventils 104 werden nacheinander das Ventil 109a, etwas später das Ventil 109b und, wiederum zeitverzögert, das Ventil 109c geöffnet. Über die den Ventilen 109a,109b,109c zugeordneten Regeleinrichtungen kann die Menge und der Druck des zusätzlich in den jeweiligen Abschnitt der Transportleitung 100 einströmenden Transportgases geregelt werden.

Beim Wiederanfahren der Transportstrecke, beispielsweise nach der Neubefüllung des Druckförderers 101, wird das noch in der Förderstrecke befindliche Gut durch ein entgegen der Flußrichtung G erfolgendes zeitversetztes Öffnen der Ventile 109a,109b,109c und das damit einhergehende zeitversetzt einsetzende Einströmen von harten Fluidgasstrahlen wieder in Bewegung versetzt.

## Patentansprüche

1. Düsenpatrone (20 ; 111), die in der Aufnahmeöffnung (11,112) einer Fördervorrichtung (1,100) für fließfähige, insbesondere rieselfähige oder pulverförmige Stoffe montiert ist, mit einem Gehäuse, welches einen Zuströmkanal (23b) aufweist, in welchem ein gasdurchlässiger Sintermetallkörper (21) sitzt, durch den ein gasförmiges Fluid in die Fördervorrichtung (1,100) einströmen kann, **dadurch gekennzeichnet**,
- daß der Sintermetallkörper (21) mit seinem der Fördervorrichtung (1,100) zugeordneten, stirnseitigen Endabschnitt zumindest teilweise in der Aufnahmeöffnung (11,112) sitzt, und
- daß der Zuströmkanal (23b) in Strömungsrichtung (F) des Fluids unmittelbar vor dem Sintermetallkörper (21) nach Art einer Düsenbohrung (23c) verengt ist.

2. Düsenpatrone nach Anspruch 1,
**dadurch gekennzeichnet**, daß der Sintermetallkörper (21) mindestens mit seinem der Fördervorrichtung zugeordneten Endabschnitt frei über die der Fördervorrichtung (1,100) zugeordnete Stirnseite (22a) des Gehäuses ragt.

3. Düsenpatrone nach Anspruch 2, **dadurch gekennzeichnet, daß** der Sintermetallkörper (21) mit mehr als der Hälfte seiner Länge frei über die der Fördervorrichtung zugeordnete Stirnseite (22a) des Gehäuses hinaussteht.

4. Düsenpatrone nach einem der voranstehenden Ansprüche, **dadurch gekennzeichnet, daß** die der Fördervorrichtung zugeordnete Stirnfläche (21d) des Sintermetallkörpers (21) gasdurchlässig ist, während die seitlichen Umfangsflächen (21c) mindestens des in die Fördervorrichtung (1,100) ragenden Endabschnitts (21a) des Sintermetallkörpers (21) gasdicht ausgebildet sind.

5. Düsenpatrone nach einem der voranstehenden Ansprüche, **dadurch gekennzeichnet**, daß der Sintermetallkörper (21) hochporös ausgebildet ist.

6. Düsenpatrone nach einem der voranstehenden Ansprüche, **dadurch gekennzeichnet**, daß die Düsenpatrone (20) lösbar an der Fördervorrichtung befestigt ist.

7. Düsenpatrone nach Anspruch 6, **dadurch gekennzeichnet**, **daß** das Gehäuse mindestens aus einem in die Aufnahmeöffnung (11,112) der Fördervorrichtung einschraubbaren Einschraubkörper (22) und einem den Zuströmkanal (23b) und die Düsenbohrung (23c) aufnehmenden Düsenkörper (23) gebildet ist.

8. Düsenpatrone nach einem der voranstehenden Ansprüche, **dadurch gekennzeichnet, daß** in den Zuströmkanal (23b) das Ende einer Fluidleitung (14) einsteckbar ist und daß die Fluidleitung (14) durch eine auf das Gehäuse aufschraubbare Überwurfmutter (25) in dem Zuströmkanal (23b) gehalten ist.

9. Düsenpatrone nach einem der voranstehenden Ansprüche, **dadurch gekennzeichnet, daß** die der Fördervorrichtung zugeordnete Stirnfläche (21d) des Sintermetallkörpers (21) eben, konisch oder konvex ausgebildet ist.

10. Düsenpatrone nach einem der voranstehenden Ansprüche, **dadurch gekennzeichnet, daß** der Sintermetallkörper (21) eine zentral angeordnete, ausgehend von seiner dem Zuströmkanal (23b) zugeordneten Stirnfläche (31e) eingeformte Einsenkung (21f) aufweist, in die das aus der Düsenbohrung (23c) austretende Gas einströmt.

11. Verwendung einer Düsenpatrone nach einem der Ansprüche 1 bis 10 zum Eindüsen eines gasförmigen Fluids in einen Auslaufkonus (1) einer Fördereinrichtung für fließfähige, insbesondere rieselfähige oder pulverförmige Stoffe.

12. Verwendung nach Anspruch 11, **dadurch gekennzeichnet**, **daß** der Auslaufkonus (1) in mindestens ein oberes und ein unteres Teil (30,31) geteilt ist und daß das obere Teil (30) lösbar mit dem unteren Teil (31) verbunden ist.

13. Verwendung einer Düsenpatrone nach einem der Ansprüche 1 bis 10 zum Eindüsen eines gasförmigen Fluids in eine Förderleitung (100) für eine Dichtstromförderung.

14. Verwendung nach Anspruch 13, **dadurch gekennzeichnet**, **daß** über in regelmäßigen Abständen zueinander angeordnete Düsenpatronen (20) ein gasförmiges Fluid in die Förderleitung (100) einströmt.

15. Verwendung nach einem der Ansprüche 13 oder 14, **dadurch gekennzeichnet, daß** ein aus den Düsenpatronen (20) austretender Strahl des gasförmigen Fluids im wesentlichen rechtwinklig zur Längsachse der Förderleitung (100) ausgerichtet ist.

16. Verwendung nach einem der Ansprüche 13 bis 15, **dadurch gekennzeichnet, daß** die Fluidgasversorgung der Düsenpatronen einzeln oder gruppenweise regelbar ist.

## Claims

1. A nozzle cartridge (20; 111) which is mounted in the receiving opening (11, 112) of a conveying device (1, 100) for free-flowing, more particularly pourable or pulverulent materials and having a casing having an inflow channel (23b) in which a gas-permeable sintered metal body (21) is disposed through which a gaseous fluid can flow into the conveying device (1, 100),
**characterised in that**
- the sintered metal body (21) is disposed at least partially in the receiving opening (11, 112) by its end face end portion associated with the conveying device (1, 100), and
- the inflow channel (23b) is narrowed after the fashion of a nozzle bore (23c) in the direction of flow (F) of the fluid immediately upstream of the sintered metal body (21).

2. A nozzle cartridge according to claim 1,
**characterised in that** the sintered metal body (21) extends freely beyond the casing end face (22a) associated with the conveying device (1, 100) at least by its end portion associated with the conveying device.

3. A nozzle cartridge according to claim 2,
**characterised in that** the sintered metal body (21) projects freely beyond the casing end face (22a) associated with the conveying device by more than half its length.

4. A nozzle cartridge according to one of the preceding claims,
**characterised in that** the end face (21d) of the sintered metal body (21) associated with the conveying device is permeable to gas, while the lateral peripheral faces (21c) at least of the end portion (21a) of the sintered metal body (21) extending into the conveying device (1, 100) are constructed gas-tight.

5. A nozzle cartridge according to one of the preceding claims,
**characterised in that** the sintered metal body (21) is constructed highly porous.

6. A nozzle cartridge according to one of the preceding claims,
**characterised in that** the nozzle cartridge (20) is attached releasably to the conveying device.

7. A nozzle cartridge according to claim 6,
**characterised in that** the casing is formed at least by a screw member (22) screwable into the receiving opening (11, 112) of the conveying device, and a nozzle member (23) receiving the inflow channel (23b) and the nozzle bore (23c).

8. A nozzle cartridge according to one of the preceding claims,
**characterised in that** the end of a fluid line (14) can be inserted in the inflow channel (23b), and the fluid line (14) is retained in the inflow channel (23b) by a cap nut (25) screwable on to the casing.

9. A nozzle cartridge according to one of the preceding claims,
**characterised in that** the end face (21d) of the sintered metal member (21) associated with the conveying device is constructed flat, conical or convex.

10. A nozzle cartridge according to one of the preceding claims,
**characterised in that** the sintered metal member (21) is formed with a central depression (21f), starting from its end face (31e) associated with the inflow channel (23b), into which the gas emerging from the nozzle bore (23c) flows.

11. Use of a nozzle cartridge according to one of claims 1 to 10 for the injection of a gaseous fluid into a discharge cone (1) of a conveying device for free-flowing, more particularly pourable or pulverulent materials.

12. Use according to claim 11,
**characterised in that** the discharge cone (1) is divided into at least one upper and one lower portion (30, 31), the upper portion (30) being releasably connected to the lower portion (31).

13. Use of a nozzle cartridge according to one of claims 1 to 10 for injecting a gaseous fluid into a conveying line (100) for a dense flow conveying.

14. Use according to claim 13,
**characterised in that** a gaseous fluid flows into the conveying line (100) via nozzle cartridges (20) disposed at regular intervals from one another.

15. Use according to one of claims 13 or 14,
**characterised in that** a jet of the gaseous fluid emerging from the nozzle cartridges (20) is directed substantially at right angles to the longitudinal axis of the conveying line (100).

16. Use according to one of claims 13 to 15,
**characterised in that** the fluid gas supply of the nozzle cartridges can be controlled individually or in groups.

## Revendications

1. Cartouche de buse (20; 111) montée dans l'ouverture réceptrice (11, 112) d'un dispositif convoyeur (1, 100) pour matériaux fluides, en particulier pour matériaux poudreux ou pulvérulents, comportant un boîtier contenant un canal d'amenée (23b) dans lequel se loge un corps (21) en métal fritté perméable aux gaz, corps à travers lequel un fluide gazeux peut affluer dans le dispositif convoyeur (1, 100),
caractérisée en ce que
- la partie terminale frontale du corps (21) en métal fritté, qui est tournée vers le dispositif convoyeur (1, 100), se loge au moins partiellement dans l'ouverture réceptrice (11, 112), et que
- le canal d'amenée (23b) se resserre immédiatement avant le corps (21) en métal fritté, dans le sens de l'écoulement (F) du fluide, à la manière d'un orifice d'étranglement (23c).

2. Cartouche de buse selon la revendication 1, caractérisée en ce que le corps (21) en métal fritté fait saillie, du moins par sa partie terminale, qui est tournée vers le dispositif convoyeur, au-dessus de la face frontale (22a) du boîtier, qui est tournée vers le dispositif convoyeur (1, 100).

3. Cartouche de buse selon la revendication 2, caractérisée en ce que le corps (21) en métal fritté fait saillie, sur plus de la moitié de sa longueur, au-dessus de la face frontale (22a) du boîtier, qui est tournée vers le dispositif convoyeur.

4. Cartouche de buse selon l'une des revendications précédentes, caractérisée en ce que la face frontale (21d) du corps (21) en métal fritté, qui est tournée vers le dispositif convoyeur, est perméable aux gaz, alors que les surfaces périphériques latérales (21c), au moins celles de la partie terminale (21a) du corps (21) en métal fritté, qui font saillie à l'intérieur du dispositif convoyeur, sont configurées de façon étanche aux gaz.

5. Cartouche de buse selon l'une des revendications précédentes, caractérisée en ce que le corps (21) en métal fritté est hautement poreux.

6. Cartouche de buse selon l'une des revendications précédentes, caractérisée en ce que la cartouche de buse (20) est fixée de façon démontable au dispositif convoyeur.

7. Cartouche de buse selon la revendication 6, caractérisée en ce que le boîtier est constitué au moins d'un corps de vis (22) pouvant être vissé dans l'ouverture réceptrice (11, 112) du dispositif convoyeur, et d'un corps de buse (23) contenant le canal d'amenée (23b) et l'orifice d'étranglement (23c).

8. Cartouche de buse selon l'une des revendications précédentes, caractérisée en ce que l'extrémité d'une conduite de fluide (14) peut être emmanchée dans le canal d'amenée (23b), et en ce que la conduite de fluide (14) est maintenue dans le canal d'amenée (23b) par un écrou-raccord (25) pouvant être vissé sur le boîtier.

9. Cartouche de buse selon l'une des revendications précédentes, caractérisée en ce que la face frontale (21d) du corps (21) en métal fritté, qui est tournée vers le dispositif convoyeur, est de configuration plane, conique ou convexe.

10. Cartouche de buse selon l'une des revendications précédentes, caractérisée en ce que le corps (21) en métal fritté comporte un lamage (21f) aménagé de façon centrale et partant de sa face frontale (31e), qui est associée au canal d'amenée (23b), lamage dans lequel arrive le gaz ressortant de l'orifice d'étranglement (23c).

11. Utilisation d'une cartouche de buse selon l'une des revendications 1 à 10 pour l'injection d'un fluide gazeux dans le cône de décharge (1) d'un dispositif convoyeur pour matériaux fluides, en particulier pour matériaux poudreux ou pulvérulents.

12. Utilisation selon la revendication 11, caractérisée en ce que le cône de décharge (1) est divisé en au moins une partie supérieure et une partie inférieure (30, 31), et en ce que la partie supérieure (30) est reliée de façon démontable à la partie inférieure (31).

13. Utilisation d'une cartouche de buse selon l'une des revendications 1 à 10 pour l'injection d'un fluide gazeux dans une conduite de transport (100) en vue d'un transport en flux dense.

14. Utilisation selon la revendication 13, caractérisée en ce qu'un fluide gazeux afflue dans la conduite de transport (100) à travers des cartouches de buses (20) disposées à des intervalles réguliers les unes des autres.

15. Utilisation selon l'une des revendications 13 ou 14, caractérisée en ce qu'un jet du fluide gazeux, qui sort des cartouches de buses (20), est orienté essentiellement perpendiculairement à l'axe longitudinal de la conduite de transport (100).

16. Utilisation selon l'une des revendications 13 à 15, caractérisée en ce que l'alimentation en fluide des cartouches de buses est réglable individuellement ou par groupes.
